(19) Europäisches Patentamt
European Patent Office
Office européen des brevets

(11) **EP 2 432 288 A1**

(12) **EUROPEAN PATENT APPLICATION**

(43) Date of publication:
**21.03.2012 Bulletin 2012/12**

(51) Int Cl.:
***H04W 68/00*** (2009.01)

(21) Application number: **10177292.9**

(22) Date of filing: **17.09.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(71) Applicant: **ST-Ericsson SA**<br>**1228 Plan-les-Ouates (CH)** | (72) Inventors:<br>• **Lebreton, Olivier**<br>**72220, SAINT MARS DOUTILLE (FR)**<br>• **Durand, Jérôme**<br>**72100, LE MANS (FR)**<br><br>(74) Representative: **Verdure, Stéphane**<br>**Cabinet Plasseraud**<br>**52 rue de la Victoire**<br>**75440 Paris Cedex 09 (FR)** |

(54) **Paging reading conflict management in dual standby handsets.**

(57)    A wireless communication apparatus to receive and transmit data via a first cell belonging to a first wireless network and a second cell belonging to a second wireless network comprises:
• a radio transceiver module (9);
• a processor (11) comprising
• a driver (21) of the radio transceiver module to choose one network that the radio transceiver module should listen to; and

• a pattern detector (23) to obtain, for each of the first and second networks, a paging block repetition pattern for paging blocks assigned to the apparatus; and
• a conflict manager (25) to select the network to listen when a paging block of the first network collides with a paging block of the second network. The conflict manager selects the network based on the obtained paging block repetition patterns to minimize the probability of loss of a paging message associated to the paging blocks by predicting the next paging block transmissions.

Fig. 1

**Description**

Field of the invention

The invention relates to the field of wireless handsets able to handle two network connections.

Background of the invention

By wireless handset, it is meant a cellular phone using radio waves to enable a party to make phone calls to another party. There are various well-known cellular communication technologies. The GSM (Global System for Mobile communications) system which uses time division multiple access technology and the UMTS (Universal Mobile Telecommunications System) which uses code division multiple access technology are two examples of such technologies.

With the advanced development of wireless communication technologies, it is now possible to support multiple wireless communication subscriptions using different or the same communication technologies in one communication apparatus.

In some handsets able to handle two communications, the same baseband and radiofrequency circuitry is used to access two independent cellular networks. Therefore, there is a general problem of management of this unique resource when both cellular networks need to establish a communication with the handset at the same time.

Particularly, when the handset is in idle mode, it needs to listen regularly to the networks to be informed of any incoming call. However, as the timing of each network may be totally independent, a conflict occurs when the handset has to listen to both networks at the same time. In this situation, the handset may miss an incoming call.

Technically speaking, the handset in idle mode can be reached by the network via the Paging Channel (PCH). The handset regularly (i.e. periodically) monitors the PCH. Meanwhile, the monitoring moments are referred to as paging occasions. In GSM or UMTS, the handset, also known as the mobile station (MS) or the user equipment (UE), may use discontinuous reception (DRX) during the idle mode to reduce power consumption. When DRX is used, the base station, i.e. the network, may transmit the paging messages periodically at the paging occasions and thus, the handset can receive the paging messages carried in the paging channel (PCH) burst at the paging occasions. The paging occasion defines the time for the handset to wake up and receive the PCH burst. After receiving the paging message, the handset may decide whether or not to sleep again by checking a flag (for instance, the "Page Indicator (PI)" in UMTS or the "MS Identity IE" in GSM) in the paging message. If the flag reveals that the handset is now being paged, the handset may initiate a process to receive the incoming call. Otherwise the handset may decide to sleep again and wake up at its next paging occasion.

When the radio transceiver module of a handset is shared between two identity cards, i.e. two network subscriptions, the handset may monitor only one wireless network for a specific time interval. As a result, listening to a paging message for one accessible wireless network during a wake-up time slot, i.e. paging occasion, may hinder listening for another accessible wireless network. Paging collisions occur when at least two paging occasions corresponding to different wireless networks respectively are present in the substantially same wake-up time slot (e.g. overlapping or identical time slots).

The patent application US 2009/0215473 discloses a communication apparatus in which a first subscriber identity card camps on a first cell and a second subscriber identity card camps on a second cell. A processor obtains information regarding first paging occasions distributed within a predetermined time interval for the first subscriber identity card, obtains information regarding second paging occasions distributed within the predetermined time interval for the second subscriber identity card, detects a forthcoming time slot of the predetermined time interval in which one of the first paging occasions collides with one of the second paging occasions, determines listening to one of the first cell and the second cell in the detected time slot, and notifies of the determination to the radio transceiver module so as to direct the radio transceiver module to listen to the determined cell to receive a corresponding paging message from the determined cell in the detected time slot.

Summary of the invention

There is a need to find alternative and/or better conflict management algorithms which will preferably be able to reduce the overall rate of paging message lost. It will also be advantageous to define a conflict management method which reduces the wake-up time of the handset.

In a first aspect of the invention a wireless communication apparatus adapted to transmit data via a first cell belonging to a first wireless network and a second cell belonging to a second wireless network, comprises:

- a radio transceiver module;
- a first interface to a first subscriber identity card camping on the first cell;
- a second interface to a second subscriber identity card camping on the second cell; and
- a processor coupled to the radio transceiver module, the first and the second interfaces

The processor comprises

- a driver of the radio transceiver module configured to choose one network that the radio transceiver module should listen to; and

- a pattern detector configured to obtain, for each of the first and second networks, a paging block repetition pattern for paging blocks assigned to the apparatus; and

- a conflict manager configured to select the network to listen when a paging block of the first network collides with a paging block of the second network. The conflict manager is configured to select the network based on the obtained paging block repetition patterns to minimize the loose of a paging message associated to the paging blocks by predicting the next paging block transmissions.

Therefore the apparatus may advantageously reduce the overall rate of paging message lost.

In some embodiments,

- each network signal a calls for the apparatus by applying a pattern assigned to the apparatus on at least two paging blocks. The delays between two consecutive paging blocks on which the pattern is applied are predetermined, specific to each network and forming a repetition pattern. The pattern detector detects, for each network, the delays. On some network, a call for the apparatus is generated by applying a pattern assigned to the apparatus on three paging blocks. The apparatus may advantageously knows when the next paging blocks will happen and predicts thus their transmission.

- the apparatus may request a dummy service inducing an answer and, upon reception of the paging blocks, determine and save the predetermined delays without answering to the network. Therefore, the apparatus is not obliged to wait for a call for knowing the repetition pattern. However, the apparatus may also verify the paging block repetition pattern by postponing answering to a network call to the apparatus until the last paging block assigned to the apparatus is received.

- the conflict manager selects the network for which a current paging block has a highest priority and/or when two conflicting paging blocks have the same priority, the conflict manager selects a network that differs from the previous selected network. These rules have the advantage to select the network which has the higher risk to have the call not answered if it is not selected.

In a second aspect of the invention a method of selecting a network for a wireless communication apparatus transmitting data via a first cell belonging to a first wireless network and a second cell belonging to a second wireless network as disclosed here above comprises:

- obtaining, for each network, a paging block repetition pattern for paging blocks assigned to the apparatus;

- listening when a paging block of the first network collides with a paging block of the second network; and

- selecting the network based on the obtained paging block repetition patterns to minimize the loose of a paging message associated to the paging blocks by predicting the next paging block transmissions.

In a third aspect of the invention, a computer program product comprises program instructions to implement any of the method steps of the here above method when loaded and run on computer means of a wireless communication apparatus.

Some embodiments of the apparatus are also applicable for the method.

Depending on the type of handset and/or network, a particular embodiment may be preferred as easier to adapt or as giving a better result. Aspects of these particular embodiments may be combined or modified as appropriate or desired, however.

Brief description of the drawings

These and other aspects of the invention will be apparent from and elucidated with reference to the embodiment described hereafter where:

-    Figure 1 is a schematic view of an example network topology according to some embodiments of the invention;

-    Figure 2 is an example distribution of paging blocks along a time axis;

-    Figure 3 is a flow chart of a method to solve a paging block conflict according to some embodiments of the invention; and

-    Figures 4 to 9 are examples of conflict management according to some embodiments of the invention.

Detailed description

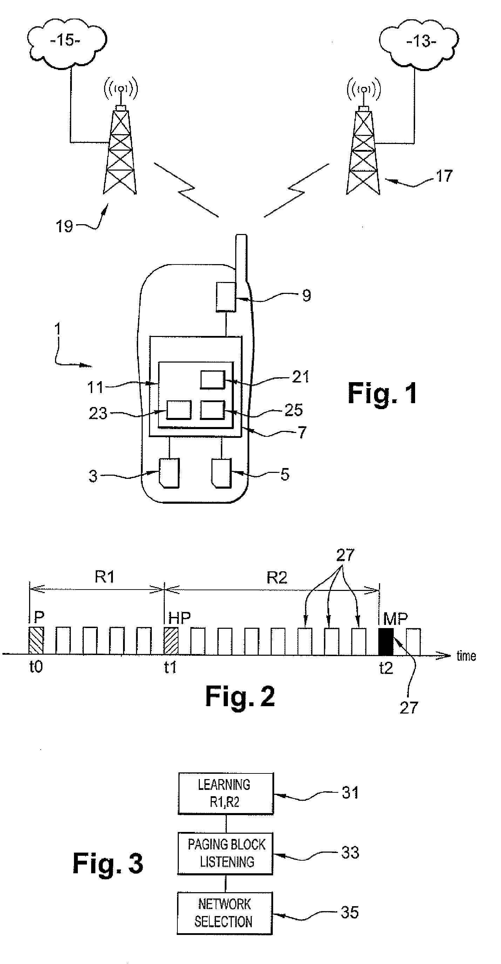

In reference to Figure 1, a wireless communication apparatus 1, hereafter called a handset, comprises two subscriber identity cards 3 and 5, e.g. SIM cards, a baseband module 7, and a radio transceiver module 9, wherein the baseband module 7 is coupled to the subscriber identity cards 3, 5 and the radio transceiver module 9. The radio transceiver module 9 receives wireless radio frequency signals, converts the received signals to baseband signals to be processed by the baseband module 7, or receives baseband signals from the baseband module 7 and converts the received signals to wireless radio frequency signals to be transmitted to a peer device. The baseband module 7 further comprises a processor 11 for controlling the operation of the subscriber identity cards 3, 5 and the radio transceiver module 9.

The handset 1 may simultaneously access more than one core network such as the networks 13, 15. The networks 13, 15 use, for instance, 3GPP technology. The handset 1 may make a voice or data call to a party through the networks via base stations 17, 19.

The processor 11 comprises a driver 21 of the radio transceiver module 9 configured to choose one network that the radio transceiver module should listen to.

Therefore, the networks use paging blocks to inform the handset 1 of the incoming of a call.

Figure 2 illustrates a time series of paging blocks emitted by a base station.

Every DRX period, a paging block 27 is sent. However all paging blocks do not concern the handset 1. Only paging blocks containing a paging indicator relative the handset are signaling to the handset that a call is waiting.

These paging blocks are drawn in striped and black in Figure 2.

Typically, each network signals a call for the handset 1 by sending a pattern of, for instance, three paging blocks P, HP and MP assigned to the handset 1, the second paging block HP being sent a first predetermined delay R1 after the first paging block P and the third paging block MP being sent a second predetermined delay R2 after the second paging block HP. The first and second predetermined delays R1, R2 may be specific to each network.

Thus the processor 7 of the handset of Figure 1 comprises also a pattern detector 23 configured to obtain, for each of the first and second networks 13, 15, a paging block repetition pattern for paging blocks assigned to the apparatus; and a conflict manager 25 configured to select the network to listen when a paging block of the first network collides with a paging block of the second network. The conflict manager is configured to select the network based on the obtained paging block repetition patterns to minimize the loose of a communication call associated to the paging blocks by predicting the next paging block transmissions.

As explained in the preamble, the handset 1 may use discontinuous reception (DRX) during the idle mode to reduce power consumption.

To manage a paging block conflict, Figure 3, the handset 1 starts by a learning phase, step 31, to learn the paging repetition pattern applied by each network where the handset 1 camps on. Then, step 33, it listens when a paging block of the first network collides with a paging block of the second network. It selects, step 35, the network based on the obtained paging block repetition patterns to minimize the loose of a paging message associated to the paging blocks by predicting the next paging block transmissions.

The learning phase consists in detecting the first and second predetermined delays R1, R2.

One way for the handset to be able to detect and store the paging transmission sequence is to force the network to send paging blocks, also called paging messages, assigned to the handset 1.

In an initial phase after a switch on, the handset 1 may request a dummy service (e.g. via SMS) which induces an answer. Upon the reception of the paging blocks, the handset executes the following steps:

- If the paging message is assigned to the handset, save its reception time and do not answer to the network;
- Repeat the above action upon reception of the second and third paging blocks.

Therefore, as depicted in Figure 2, the handset will store the predetermined delays R1, R2, also called paging distances, describing the repetition pattern applied by the network.

This learning phase may be executed on both networks. Until the learning phase is completed on both networks, the handset may toggle the listening between networks on each conflict occurrence.

During operation, the network repetition pattern may be reconfirmed or updated. For that, the handset 1 may repeat the learning procedure e.g periodically and/or at the time of an incoming call. The handset 1 may save the R1, R2 delays and postpone answering the call until the third paging block MT.

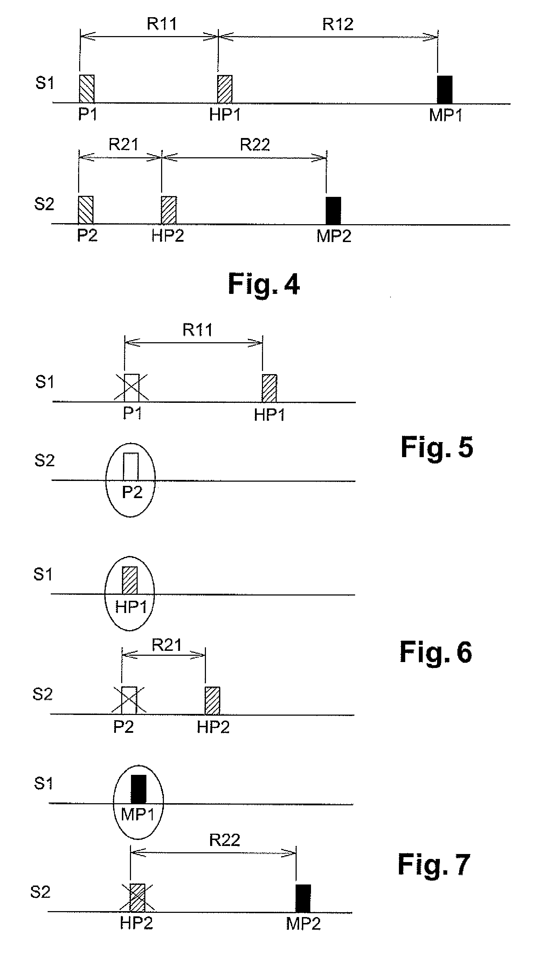

As shown in Figure 4, after the learning phase, the handset 1 has stored the paging repetition pattern for both networks S1, S2.

- For S1, the pattern is the repetition factors R11, R12;
- For S2, the pattern is the repetition factors R21, R22.

To manage the paging block reading conflict between both networks, the stored repetition patterns are used to predict the next paging transmission assigned to the handset 1.

Some generic rules may be applied:

- Second paging blocks HPx take priority over first paging blocks Px (rule 1). Thus, HPx has higher rank than Px; and
- Third paging blocks MPx take priority over second paging blocks HPx, and therefore, first paging blocks Px (rule 2). Thus MPx is higher ranked than HPx.
- In case of conflict between paging blocks with same priority, or same rank, a toggle compared to the previous selection may be applied (rule 3).
- In case of conflict between next to last paging block repetition, an additional check is done to ensure that the last paging block repetition will not be in conflict and thus will be correctly received.

A paging block of higher rank has thus priority over a paging block of lower rank.

Now some examples are given to illustrate a conflict management according to the disclosed rules.

Figure 5 illustrates a conflict between two paging blocks S1(P1) and S2(P2) of same priority. A toggle compared to the previous selection is applied (rule 3) and S2(P2) is selected.

Then S1 paging assignment is predicted with the second paging block

$$HP1: S1(HP1) = S1(P1 + R11).$$

Figure 6 illustrates a conflict between two paging blocks S1(HP1) and S2(P2) of different priority. According to rule 1, S1(HP1) takes priority over S2(P2) then S1(HP1) is selected. Next, S2 paging assignment is predicted:

$$S2(HP2) = S2(P2 + R21).$$

Figure 7 illustrates a conflict between two paging blocks S1(MP1) and S2(HP2) of different priority. According to rule 2, S1(MP1) takes priority over S2(HP2) then S1(MP1) is selected. Next, S2 paging assignment is predicted:

$$S2(MP2) = S2(HP2 + R22).$$

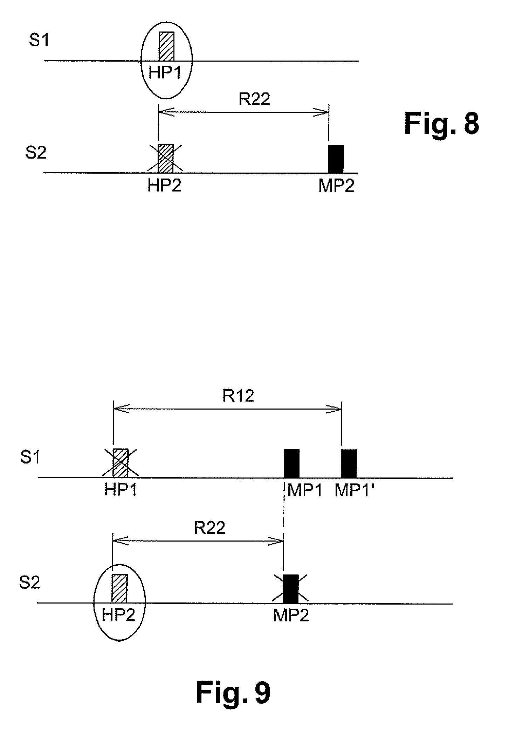

Figure 8 illustrates a conflict between two paging blocks S1(HP1) and S2(HP2) of same priority. A toggle compared to the previous selection is applied (rule 3). By application of rule 4, knowing the different delays between paging blocks, it can be predicted that S2(HP2 + R22), i.e. S2(MP2) has no conflict with a S1(MP1), i.e. S1(HP1 + R12), as R22 is different from R12, then S1(HP1) is selected.
Then S2 paging assignment is predicted with the third paging block

$$MP2: S2(MP2) = S2(HP2 + R22).$$

Figure 9 illustrates a conflict between two paging blocks S1(HP1) and S2(HP2) of same priority. A toggle compared to the previous selection is applied (rule 3). S2(HP2 + R22) has a conflict with a S1(MP1) (rule 4) which should already been predicted as the delays between HP1 and MP1, respectively, HP2 and MP2, are known to be identical, then S2(HP2) is selected.
Then S1 paging assignment is predicted with the third paging block

$$MP1': S1(MP1') = S1(HP1 + R12).$$

The method may be implemented by a computer program product that is able to implement any of the method steps as described above when loaded and run on computer means of a wireless communication apparatus. The computer program may be stored/distributed on a suitable medium supplied together with or as a part of other hardware, but may also be distributed in other forms, such as via the Internet or other wired or wireless telecommunication systems.
An integrated circuit may be arranged to perform any of the method steps in accordance with the disclosed embodiments.
While the invention has been illustrated and described in details in the drawings and foregoing description, such illustration and description are to be considered illustrative or exemplary and not restrictive; the invention is not limited to the disclosed embodiment.
Particularly, embodiments are disclosed in the context of accessing two different networks from a handset. However, it should be emphasized that the disclosed embodiments are also applicable in handsets with two, or more, subscription cards belonging to the same network.
Furthermore, the description is disclosing embodiments using the example of two subscription identity cards. However, the disclosed embodiments are also applicable where a handset comprises three or more subscription identity cards.
Other variations to the disclosed embodiments can be understood and effected by those skilled on the art in practicing the claimed invention, from a study of the drawings, the disclosure and the appended claims. In the claims, the word "comprising" does not exclude other elements and the indefinite article "a" or "an" does not exclude a plurality.

**Claims**

1. A wireless communication apparatus adapted to receive and transmit data via a first cell belonging to a first wireless network and a second cell belonging to a second wireless network, comprising:

   • a radio transceiver module (9) ;
   • a first interface for a first subscriber identity card (3) camping on the first cell ;
   • a second interface for a second subscriber identity card (5) camping on the second cell;
   • a processor (11) coupled to the radio transceiver module, the first and the second interfaces and comprising

      • a driver (21) of the radio transceiver module configured to choose one network that the radio transceiver module should listen to; and
      • a pattern detector (23) configured to obtain, for each of the first and second networks, a paging block repetition pattern for paging blocks assigned to the apparatus; and
      • a conflict manager (25) configured to select the network to listen to when a paging block of the first network collides with a paging block of the second network, wherein the conflict manager is configured to select the network based on the obtained paging block repetition patterns to minimize the probability of loss of a paging message associated to the paging blocks by predicting the next paging block transmissions.

2. Apparatus according to claim 1, wherein each network is configured to signal a call for the apparatus by applying a pattern assigned to the apparatus on at least two paging blocks, the delays between two consecutive paging blocks on which the pattern is applied being predetermined, specific to each network and forming a repetition pattern, and wherein the pattern detector is configured to detect, for each network, the delays.

3. Apparatus according to claim 2, wherein each network is configured to signal a call for the apparatus by applying a pattern assigned to the apparatus on three paging blocks.

4. Apparatus according to claims 2 or 3, wherein, the apparatus is configured to request a dummy service inducing an answer and, upon reception of the paging blocks, determine and save the predetermined delays without answering to the network.

5. Apparatus according to claims 2, 3 or 4, wherein the apparatus is configured to verify the paging block repetition pattern by postponing answering to a network call to the apparatus until the last paging block assigned to the apparatus is received.

6. Apparatus according to any one of the claims 2 to 5, wherein the conflict manager selects the network for which a current paging block has a highest priority.

7. Apparatus according to claim 6, wherein, when two conflicting paging blocks have the same priority, the conflict manager selects a network that differs from the previous selected network.

8. Apparatus according to any one of the claims 1 to 7, wherein the first wireless network is the same network as the second wireless network.

9. A wireless communication device comprising an apparatus according to any one of the claims 1 to 8, a first subscriber identity card (3) and a second subscriber identity card (5).

10. Method of selecting a network for a wireless communication apparatus receiving and transmitting data via a first cell belonging to a first wireless network and a second cell belonging to a second wireless network, the apparatus comprising:

• a radio transceiver module;
• a first interface for a first subscriber identity card camping on the first cell ;
• a second interface for a second subscriber identity card camping on the second cell;
• a processor coupled to the radio transceiver module, the first and the second interfaces;

said method comprising:

• obtaining (31), for each network, a paging block repetition pattern for paging blocks assigned to the apparatus;
• listening (33) when a paging block of the first network collides with a paging block of the second network; and
• selecting (35) the network based on the obtained paging block repetition patterns to minimize the probability of loss of a paging message associated to the paging blocks by predicting the next paging block transmissions.

11. Method according to claim 10, wherein each network is configured to signal a call for the apparatus by applying a pattern assigned to the apparatus on at least two paging blocks, the delays between two consecutive paging blocks on which the pattern is applied being predetermined, specific to each network and forming a repetition pattern, and wherein to obtain the paging block repetition pattern, for each network, the delays are detected.

12. Method according to claim 11, wherein, a dummy service inducing an answer is requested and, upon reception of the paging blocks, the predetermined delays are determined and saved without answering to the network.

13. Method according to claims 11 or 12, wherein the paging block repetition pattern is verified by postponing answering to a network call to the apparatus until the last paging block assigned to the apparatus is received.

14. A computer program product comprising a computer readable medium, having thereon a computer program comprising program instructions adapted to implement any of the method steps of the method according to one of the claims 10 to 14 when loaded and run on computer means of a wireless communication apparatus.

15. A processor for a wireless communication apparatus, the apparatus adapted to receive and transmit data via a first cell belonging to a first wireless network and a second cell belonging to a second wireless network, the processor connectable to:

• a radio transceiver module (9) ;
• a first interface for a first subscriber identity card (3) camping on the first cell ;
• a second interface for a second subscriber identity card (5) camping on the second cell;

the processor comprising

• a driver (21) of the radio transceiver module configured to choose one network that the radio transceiver module should listen to; and
• a pattern detector (23) configured to obtain, for each of the first and second networks, a paging block repetition pattern for paging blocks assigned to the apparatus; and
• a conflict manager (25) configured to select the network to listen to when a paging block of the first network collides with a paging block of the second network, wherein the conflict manager is configured to select the network based on the obtained paging block repetition patterns to minimize the probability of loss of a paging message associated to the paging blocks by predicting the next paging block transmissions.

**Fig. 1**

**Fig. 2**

**Fig. 3**

**Fig. 4**

**Fig. 5**

**Fig. 6**

**Fig. 7**

S1 ⬯ HP1

R22

S2 HP2        MP2

**Fig. 8**

R12

S1 HP1        MP1  MP1'

R22

S2 HP2        MP2

**Fig. 9**

**EUROPEAN SEARCH REPORT**

Application Number

EP 10 17 7292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/215473 A1 (HSU CHIA-CHEN [TW]) 27 August 2009 (2009-08-27) * abstract * * paragraphs [0003] - [0008], [0027], [032] - [0069] * ----- | 1-15 | INV. H04W68/00 |
| X | EP 1 940 122 A2 (KONINKL KPN NV [NL]) 2 July 2008 (2008-07-02) * abstract * * paragraphs [0007], [0 11] - [0027] * ----- | 1-15 | |
| X | US 2009/215472 A1 (HSU CHIA-CHEN [TW]) 27 August 2009 (2009-08-27) * abstract * * paragraphs [0027] - [0049] * ----- | 1-15 | |

TECHNICAL FIELDS
SEARCHED      (IPC)

H04W

The present search report has been drawn up for all claims

| Place of search | Date of completion of the search | Examiner |
|---|---|---|
| Berlin | 11 February 2011 | Rosken, Wilfried |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 17 7292

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2011

| Patent document cited in search report | | Publication date | Patent family member(s) | | Publication date |
|---|---|---|---|---|---|
| US 2009215473 | A1 | 27-08-2009 | CN | 101521931 A | 02-09-2009 |
| | | | CN | 101521957 A | 02-09-2009 |
| | | | CN | 101521958 A | 02-09-2009 |
| | | | CN | 101521959 A | 02-09-2009 |
| | | | CN | 101521935 A | 02-09-2009 |
| | | | US | 2009212908 A1 | 27-08-2009 |
| | | | US | 2009215472 A1 | 27-08-2009 |
| | | | US | 2009215490 A1 | 27-08-2009 |
| | | | US | 2009215491 A1 | 27-08-2009 |
| EP 1940122 | A2 | 02-07-2008 | EP | 1940121 A2 | 02-07-2008 |
| US 2009215472 | A1 | 27-08-2009 | CN | 101521931 A | 02-09-2009 |
| | | | CN | 101521957 A | 02-09-2009 |
| | | | CN | 101521958 A | 02-09-2009 |
| | | | CN | 101521959 A | 02-09-2009 |
| | | | CN | 101521935 A | 02-09-2009 |
| | | | US | 2009212908 A1 | 27-08-2009 |
| | | | US | 2009215473 A1 | 27-08-2009 |
| | | | US | 2009215490 A1 | 27-08-2009 |
| | | | US | 2009215491 A1 | 27-08-2009 |

EPO FORM P0459

For more details about this annex : see Official Journal of the European Patent Office, No. 12/82

**EP 2 432 288 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090215473 A